# EUROPÄISCHE PATENTSCHRIFT

(11) **EP 2 398 688 B1**
(45) Veröffentlichungstag und Bekanntmachung des Hinweises auf die Patenterteilung: **20.08.2014**
(21) Anmeldenummer: 10703614.7
(22) Anmeldetag: 28.01.2010
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE

(30) Priorität: 19.02.2009 DE 102009009577
(43) Veröffentlichungstag der Anmeldung: 28.12.2011
(73) Patentinhaber: ThyssenKrupp Presta Aktiengesellschaft, 9492 Eschen (LI)
(72) Erfinder: SCHNITZER, Rony, 9491 Ruggell (LI); BLÄTTLER, Simon, 9469 Haag (CH); SENN, Mathias, 9472 Grabs (CH); ROHR, Martin, 6971 Hard (AT); SULSER, Hansjörg, 9487 Gamprin (LI)
(74) Vertreter: Hofmann, Ralf U.
(86) Internationale Anmeldenummer: PCT/AT2010/000029
(87) Internationale Veröffentlichungsnummer: WO 2010/094050

(56) Entgegenhaltungen:
- EP-A2- 1 288 103
- EP-A2- 1 839 994
- EP-A2- 1 916 175
- EP-B1- 1 479 593
- WO-A2-2007/048153
- DE-B3-102005 056 308

## Beschreibung

Die Erfindung bezieht sich auf eine Lenksäule für ein Kraftfahrzeug umfassend eine einen Abschnitt der Lenkspindel drehbar lagernde Manteleinheit und eine am Fahrzeugchassis befestigbare Trageinheit, von der die Manteleinheit getragen wird, wobei im Falle eines Fahrzeugcrashes die Manteleinheit gegenüber der Trageinheit in eine in Längsrichtung der Lenksäule ausgerichtete Verschieberichtung unter Energieabsorption verschiebbar ist,

mindestens ein zwischen der Manteleinheit und der Trageinheit wirkendes Absorptionselement mittels dem bei der Verschiebung der Manteleinheit gegenüber der Trageinheit im Crashfall Energie absorbiert wird, und
mindestens eine Schalteinheit, welche ein zwischen einer passiven und einer aktiven Schaltstellung umschaltbares Schaltstück aufweist,
wobei die beim Verschieben der Manteleinheit gegenüber der Trageinheit im Crashfall absorbierte Energie in der aktiven Schaltstellung des Schaltstücks größer als in der passiven Schaltstellung des Schaltstücks ist, indem das Schaltstück in seiner aktiven Schaltstellung in einen Eingriffsbereich des Absorptionselements oder in einen Eingriffsbereich der Manteleinheit oder in einen Eingriffsbereich der Trageinheit eingreift und in der aktiven Schaltstellung des Schaltstücks bei einer Verschiebung der Manteleinheit gegenüber der Trageinheit im Crashfall eine zusätzliche Energieabsorption durch eine gegenseitige energieabsorbierende Verschiebung zwischen dem Schaltstück und zumindest einem Abschnitt des Absorptionselements im Eingriffsbereich des Absorptionselements oder zwischen dem Schaltstück und der Manteleinheit im Eingriffsbereich der Manteleinheit oder zwischen dem Schaltstück und der Trageinheit im Eingriffsbereich der Trageinheit erfolgt.

Lenksäulen für Kraftfahrzeuge weisen herkömmlicherweise eine Manteleinheit auf (die auch als "Mantelrohr" bezeichnet wird), von der ein an das lenkradseitige Ende anschließender Abschnitt der Lenkspindel drehbar gelagert wird. Meist sind heutige Ausbildungen von Lenksäulen verstellbar, um eine Anpassung der Position des Lenkrades an die Sitzposition des Fahrers zu ermöglichen. Häufig sind diese Lenksäulen sowohl längenverstellbar als auch in ihrer Höhe bzw. Neigung verstellbar. Daneben existieren auch nur in der Länge oder nur in die Höhen- bzw. Neigungsrichtung verstellbare Lenksäulen. Im geöffneten Zustand einer Spannvorrichtung kann die Lenksäule verstellt werden und im geschlossenen Zustand der Spannvorrichtung ist die eingestellte Position der Lenksäule festgestellt.

Zur Einstellung der Lenksäule im geöffneten Zustand der Spannvorrichtung wird die Manteleinheit gegenüber einer Trageinheit, über welche die Lenksäule mit dem Chassis des Kraftfahrzeugs verbindbar ist, entsprechend verstellt. Die Lenkspindel weist zur Längenverstellung der Lenksäule gegeneinander teleskopierbare Abschnitte und zur Höhen- bzw. Neigungsverstellung der Lenksäule gegeneinander verschwenkbare Abschnitte auf.

Im Falle eines Fahrzeugcrashs soll sich die Lenksäule unter einer entsprechenden Energieabsorption zusammenschieben lassen. Es ist hierfür bekannt, zwei in eine Verschieberichtung gegeneinander verschiebbare Teile vorzusehen, wobei die Verschieberichtung im Allgemeinen parallel zur Richtung der Längenverstellung der Lenksäule, also parallel zum an das lenkradseitige Ende anschließenden Abschnitt der Lenkspindel liegt. Zwischen den beiden im Crashfall gegeneinander verschiebbaren Teilen wirkt mindestens ein Energieabsorptionselement, um eine vorgegebene Energieabsorption zu erreichen.

Beispielsweise kann es sich bei den beiden im Crashfall gegeneinander verschiebbaren Teilen um die Trageinhert, die eine Art Schlitten bildet, und eine starr am Fahrzeugchassis angebrachte Chassiseinheit handeln, gegenüber der der Schlitten verschiebbar gelagert ist. Eine derartige Ausbildung geht z.B. aus der WO 2006/042604 hervor.

Bei der aus der WO 2007/048153 bekannten Vorrichtung werden die beiden im Crashfall gegeneinander verschiebbaren Teile dagegen von der die Lenkspindel drehbar lagernden Manteleinheit und der Trageinheit gebildet. Im geschlossenen Zustand einer Spannvorrichtung sind gezahnte Arretierelemente miteinander in Eingriff, von denen das eine Arretierelement bezogen auf die Längsrichtung der Lenksäule unverschiebbar mit der Trageinheit verbunden ist und von denen das andere Arretierelement über ein Energieabsorptionselement mit der Manteleinheit verbunden ist. Im Normalbetrieb ist diese Verbindung mit der Manteleinheit ebenfalls unverschiebbar. Im Crashfall kann das Arretierelement in Längsrichtung der Manteleinheit unter Energieabsorption verschoben werden. Bei dieser Lenksäule sind weiters Ausführungsbeispiele beschrieben, bei denen die Verbindung eines oder mehrerer Arretierelemente mit der Trageinheit über eine pyrotechnische Schalteinheit erfolgt. Von dieser kann das Arretierelement von dem mit der Manteleinheit über das Energieabsorptionselement verbundenen Arretierelement abgehoben werden, um die Energieabsorptionscharakteristik im Crashfall zu verändern.

Eine Änderung der Höhe der Energieabsorption bei der gegenseitigen Verschiebung der beiden Teile der Lenksäule im Crashfall kann in Abhängigkeit von verschiedenen Parametern gewünscht sein, beispielsweise in Abhängigkeit vom Gewicht des Fahrers oder in Abhängigkeit davon, ob der Fahrer angeschnallt ist oder nicht.

Bei der aus der EP 1 479 593 B1 bekannten Lenksäule sind zwischen zwei im Crashfall gegeneinander verschiebbaren Teilen Absorptionselemente angeordnet, welche von U-förmig umgebogenen Blechstreifen gebildet werden. Diese Blechstreifen sind an einem Ende alle an der das Mantelrohr und die Lenkspindel tragenden Trageinheit befestigt. Am anderen Ende ist mindestens einer dieser Blechstreifen an einer am Fahrzeugchassis zu befestigenden Chassiseinheit befestigt. Für mindestens einen weiteren umgebogenen Blechstreifen erfolgt die Verbindung mit der Chassiseinheit über eine pyrotechnische Schalteinheit ("Pyroswitch"). Die Schalteinheit ist an der Chassiseinheit befestigt und die Verbindung des Absorptionselements mit der Chassiseinheit erfolgt über ein stiftförmiges Schaltstück der Schalteinheit, welches in einer aktiven Schaltstellung in eine Öse des Absorptionselements eingreift und in einer passiven Schaltstellung aus der Öse herausgezogen ist, wodurch die Verbindung dieses Absorptionselements mit der Chassiseinheit geöffnet ist. Die Energieabsorption bei der gegenseitigen Verschiebung der beiden Teile kann dadurch zwischen einem höheren Niveau und einem niedrigeren Niveau umgeschaltet werden. Eine ähnliche, steuerbare Energieabsorptionseinrichtung geht auch aus der EP 1 707 471 A1 hervor. Die Absorptionselemente sind hier als Aufreißstreifen ausgebildet. Für zumindest einen Aufreißstreifen kann die Verbindung mit einem karosseriefesten Befestigungsteil durch einen Pyroschalter geschlossen und geöffnet werden, um die Absorptionscharakteristik zu beeinflussen.

Eine weitere Lenksäule mit im Crashfall veränderbarer Absorptionscharakteristik geht aus der EP 1 187 752 B1 hervor. Zwischen den beiden sich im Crashfall verschiebenden Teilen der Lenksäule wirken als Energieabsorptionselemente U-förmig umgebogene Haltestreifen, wobei mindestens ein Bolzen zur Verbindung des Absorptionselements mit einem der beiden Teile durch ein pyrotechnisches Element unwirksam gemacht werden kann, um die Absorptionscharakteristik zu verändern.

Aus der EP 1 916 175 A2 geht eine Lenksäule der eingangs genannten Art hervor. Zur Bereitstellung einer Energieabsorption im Crashfall ist ein Absorptionselement in einer der gezeigten Ausführungsformen an der Manteleinheit festgelegt. In einem Schlitz des Absorptionselements ragt ein Bolzen und, in einer Aktivstellung, ein Schaltstück einer Schalteinheit, wobei der Bolzen und die Schalteinheit an der Trageinheit festgelegt sind. Bei der Verschiebung der Manteleinheit gegenüber der Trageinheit im Crashfall werden der Bolzen und das Schaltstück im Langloch verschoben, so dass dieses nacheinander vom Bolzen und vom Schaltstück aufgeweitet wird. Wenn die Energieabsorption verringert werden soll, so wird das Schaltstück aus dem Langloch herausgezogen. In einer weiteren Ausführungsform könnte das Absorptionselement auch an der Trageinheit festgelegt sein und der Bolzen und die Schalteinheit wären dann an der Manteleinheit festgelegt.

Aufgabe der Erfindung ist es eine einfach ausgebildete und vorteilhafte Lenksäule der eingangs genannten Art bereitzustellen, bei der die Größe der Energieabsorption bei der Verschiebung der beiden Teile der Lenksäule im Crashfall mittels einer Schalteinheit verändert werden kann. Erfindungsgemäß gelingt dies durch eine Lenksäule mit den Merkmalen des Anspruchs 1.

Bei einer Lenksäule gemäß der Erfindung ist in einer ersten Ausführungsvariante vorgesehen, dass es, wenn sich das Schaltstück in seiner aktiven Schaltstellung befindet, im Falle einer gegenseitigen Verschiebung der beiden Teile der Lenksäule (=Manteleinheit und Trageinheit) im Crashfall zu einer gegenseitigen Verschiebung unter Energieabsorption zwischen dem Schaltstück und dem Absorptionselement in einem Eingriffsbereich des Absorptionselements kommt, in den das Schaltstück in seiner aktiven Schaltstellung eingreift. In einer zweiten Ausführungsvariante ist vorgesehen, dass es, wenn sich das Schaltstück in seiner aktiven Schaltstellung befindet, im Falle einer gegenseitigen Verschiebung der beiden Teile der Lenksäule (Manteleinheit und Trageinheit) im Crashfall zu einer gegenseitigen Verschiebung unter Energieabsorption zwischen dem Schaltstück und einem der beiden sich im Crashfall gegeneinander (=relativ zueinander) verschiebenden Teile in einem Eingriffsbereich dieses Teils kommt, in den das Schaltstück in seiner aktiven Schaltstellung eingreift.

Im Gegensatz zum Stand der Technik, bei dem die Schalteinheit nur zum An- oder Abkoppeln eines Absorptionselements eingesetzt wird, bildet somit bei der Erfindung das Schaltstück einen aktiven Teil des Energieabsorptionsmechanismus, wenn es sich in seiner Aktivstellung befindet, indem es sich energiedissipierend gegenüber dem Absorptionselement oder einem Abschnitt des Absorptionselementes bzw. dem Teil der Lenksäule verschiebt, mit dem es zusammenwirkt. Es kann dadurch eine einfache und effektive Ausbildung erreicht werden. Beispielsweise kann ein ohnehin zwischen den beiden im Crashfall gegeneinander sich verschiebenden Teilen vorhandenes Absorptionselement dazu herangezogen werden, um in der aktiven Schaltstellung des Schaltstücks eine zusätzliche Energieabsorption zwischen dem Schaltstück und dem Absorptionselement zu bewirken.

Dadurch können in sehr einfacher Weise zwei verschiedene Energieabsorptionsniveaus, ein niedrigeres im Falle, dass sich das Schahstück nicht mit dem Gegenstück energiedissipierend in Eingriff befindet und ein höheres im Falle, dass das Schaltstück mit dem Gegenstück energiedissipierend in Eingriff steht.

Erfindungsgemäß ist ein Gehäuse der Schalteinheit am Absorptionselement selbst festgelegt. Es kann dadurch eine Vormontage und gegebenenfalls Funktionsprüfung vor dem Einbau in die Lenksäule durchgeführt werden, wodurch sich eine Montageerleichterung ergibt und eine sehr hohe Zuverlässigkeit erreicht werden kann.

Eine günstige Ausführungsform sieht vor, dass bei der gegenseitigen Verschiebung der beiden Teile der Lenksäule im Crashfall ein erster Abschnitt des Absorptionselements am ersten der beiden Teile unverschiebbar gehalten ist und ein zweiter Abschnitt des Absorptionselements am zweiten der beiden Teile unverschiebbar gehalten ist. Es kann sich bei diesen ersten und zweiten Abschnitten des Absorptionselements um erste und zweite Schenkel des Absorptionselements handeln, die über eine Umbiegung des Absorptionselements miteinander verbunden sind, wobei insgesamt ein U-förmig gebogener Streifen ausgebildet ist.

Das Absorptionselement kann somit in herkömmlicher Weise als "Biegelasche" oder als "Reiß-Biegelasche" ausgebildet sein, d.h. bei der gegenseitigen Verschiebung der beide Teile kommt es zu einer Biegearbeit am Absorptionselement oder kommt es gekoppelt zu einer Aufreiß- und Biegearbeit am Absorptionselement.

Vorzugsweise greift das Schaltstück der Schalteinheit in seiner aktiven Schaltstellung in den ersten Abschnitt des Absorptionselements ein, der am ersten der beiden Teile unverschiebbar gehalten ist und ist die Schalteinheit am zweiten Abschnitt des Absorptionselements befestigt, der am zweiten der beiden Teile unverschiebbar gehalten ist.

Der Eingriff des Schaltstücks in den Eingriffsbereich des Absorptionselements oder des Teils der Lenksäule, mit dem es zusammenwirkt, kann gemäß einer möglichen Ausführungsform derart sein, dass das Schaltstück in eine im Eingriffsbereich vorgesehenen Öffnung eingreift, die es bei der gegenseitigen Verschiebung der beiden Teile im Crashfall zumindest bereichsweise aufweitet. Bei dieser Öffnung kann es sich somit um parallel zur Verschieberichtung der beiden Teile verlaufendes Langloch handeln, das im Ausgangszustand (wenn noch kein Crash aufgetreten ist) einen Bereich mit einer größeren Weite aufweist, durch den sich das Schaltstück erstreckt, und einen Bereich mit einer geringeren Weite aufweist, der im Crashfall bei einer Verschiebung des Schaltstücks in ihn hinein aufgeweitet wird.

Gemäß einer weiteren möglichen Ausführungsform kann das Schaltstück bei der gegenseitigen Verschiebung der beiden Teile im Crashfall eine im Eingriffsbereich vorgesehene Öffnung, in die es ragt, weiter aufreißen (in die Verschieberichtung). Auch eine Kombination eines Aufweitens mit einem Aufreißen einer Öffnung kann beispielsweise vorgesehen sein.

In einer Weiterbildung der Erfindung kann zur Verbesserung des Aufreißens am Schaltstück eine entsprechende Schneide vorgesehen sein. Alternativ ist es denkbar und möglich, die Energieabsorption durch ein Quetschen eines Teils des Schaltstücks mit der Oberfläche des Eingriffsbereiches vorzusehen. Bei dieser Lösung ist der Kraftverlauf jedoch nicht so exakt einstellbar, so dass diese Variante weniger zu bevorzugen ist.

Bei den beiden im Crashfall gegeneinander verschiebbaren Teilen handelt es sich um eine Manteleinheit, die einen an das lenkradseitige Ende der Lenkspindel anschließenden Abschnitt der Lenkspindel drehbar lagert, und eine am Fahrzeugchassis befestigbare Trageinheit, von der die Manteleinheit getragen wird. Hierbei ist die Lenksäule zumindest in der Länge verstellbar, wobei eine Spannvorrichtung vorhanden ist, in deren geöffnetem Zustand die Manteleinheit gegenüber der Trageinheit in Längsrichtung der Lenksäule verstellbar ist und in deren geschlossenem Zustand die eingestellte Position der Manteleinheit gegenüber der Trageinheit im Normalbetrieb (also ohne auftretenden Crash), festgestellt ist. Im Crashfall kann sich die Manteleinheit gegenüber der Trageinheit in die Längsrichtung der Lenksäule verschieben, wobei mittels mindestens einem zwischen der Trageinheit und der Manteleinheit angeordneten Absorptionselement Energie absorbiert wird. Durch die Überwindung der von Feststellelementen der Spannvorrichtung, die zwischen der Trageinheit und der Manteleinheit wirken, ausgeübten Haltekraft kann es zu einer zusätzlichen Energieabsorption kommen.

Beispielsweise kann der Grenzwert der auf die Manteleinheit einwirkenden Kraft, oberhalb von dem es zu einer Verschiebung der Manteleinheit gegenüber der Trageinheit kommt, kleiner als 10.000 N sein. Vorzugsweise ist dieser Grenzwert größer als 500 N.

Günstigerweise ist vorgesehen, dass die Spannvorrichtung einen Spannbolzen umfasst, welcher Öffnungen in Seitenwangen der Trageinheit durchsetzt, zwischen denen die Manteleinheit angeordnet ist, und der beim Öffnen und Schließen der Spannvorrichtung um seine Achse gedreht wird. Hierbei ist weiters mindestens ein Halteteil zwischen den Seitenwangen der Trageinheit am bzw. auf dem Spannbolzen angeordnet, welches durch die Drehung des Spannbolzens beim Öffnen und Schließen der Spannvorrichtung verstellt wird und welches im geschlossenen Zustand der Spannvorrichtung am zweiten Abschnitt des Absorptionselements angreift, um diesen zweiten Abschnitt des Absorptionselements bei einer Verschiebung der Manteleinheit gegenüber der Trageinheit im Crashfall unverschiebbar gegenüber der Trageinheit zu halten. Mit Vorteil sind in diesem zweiten Abschnitt des Absorptionselements mehrere in Längsrichtung beabstandete Aussparungen oder Vorsprünge vorgesehen, in die, bei geschlossener Spannvorrichtung, das Halteteil, z. B. mit einem Vorsprung (oder einer Nase), eingreift oder bei beginnender Verschiebung des Manteleinheit gegenüber dem Tragteil eingreift bzw. einrastet, so dass die Verschiebung zwischen dem zweiten Abschnitt des Absorptionselements und der Trageinheit entweder unmittelbar oder nach einem kurzen vordefinierten maximalen Verschiebeweg verhindert ist. Der Spannbolzen kann hierbei durch die Ränder der von ihm durchsetzten Öffnungen in den Seitenwangen der Trageinheit bezogen auf die Längsrichtung der Lenksäule unverschiebbar gehalten sein.

Durch diese vorteilhafte Weiterbildung der Erfindung wird erreicht, dass der Verlauf der Energieabsorption über den Verschiebeweg von der eingestellten Position der Manteleinheit gegenüber der Trageinheit unabhängig ist, abgesehen von dem kurzen vordefinierten maximal möglichen Verschiebeweg bis zum Einrasten des Halteteils in den zweiten Abschnitt des Absorptionselements. Das bedeutet, dass für die jeweilige Schaltstellung des Schaltstücks jeweils ein vordefinierter Kraftverlauf über die Verschiebung der Manteleinheit gegenüber der Trageinheit mit der erfindungsgemäßen Lösung realisierbar ist.

Weitere Vorteile und Einzelheiten der Erfindung werden im Folgenden anhand der beiliegenden Zeichnung erläutert. In dieser zeigen:
Fig. 1 und Fig. 2 Schrägsichten eines Ausführungsbeispiels einer Lenksäule gemäß der Erfindung, aus unterschiedlichen Blickrichtungen;
Fig. 3 einen Längsmittelschnitt der Lenksäule;
Fig. 4 ein vergrößertes Detail A von Fig. 3;
Fig. 5 eine Schrägsicht des auf dem Spannbolzen angeordneten Halteteils zusammen mit dem Absorptionselement und der an diesem befestigten pyrotechnischen Schalteinheit; Fig. 6 die Teile von Fig. 5 in einer Schrägsicht von schräg unten, in der passiven Schaltstellung des Schaltstücks der Schalteinheit;
Fig. 7 eine Darstellung entsprechend Fig. 6 in der aktiven Schaltstellung des Schaltstück, nach einem Fahrzeugcrash;
Fig. 8 eine Schrägsicht analog Fig. 5 einer modifizierten Ausführungsform;
Fig. 9 einen Teil einer Schrägsicht einer Lenksäule gemäß einer weiteren Ausführungsform der Erfindung;
Fig. 10 einen Teil einer Schrägsicht einer Lenksäule gemäß einer weiteren Ausführungsform der Erfindung.

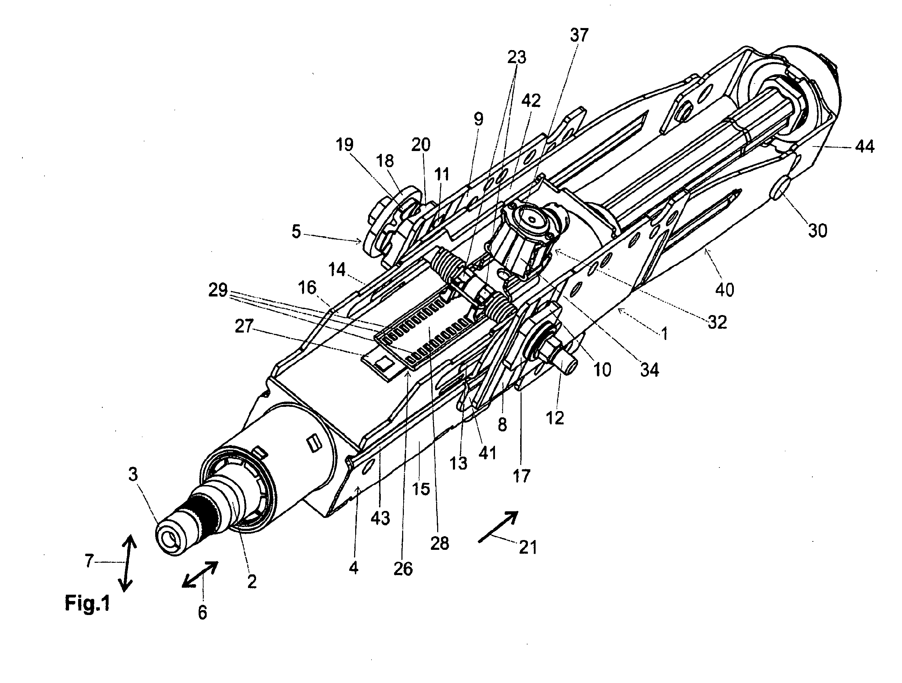

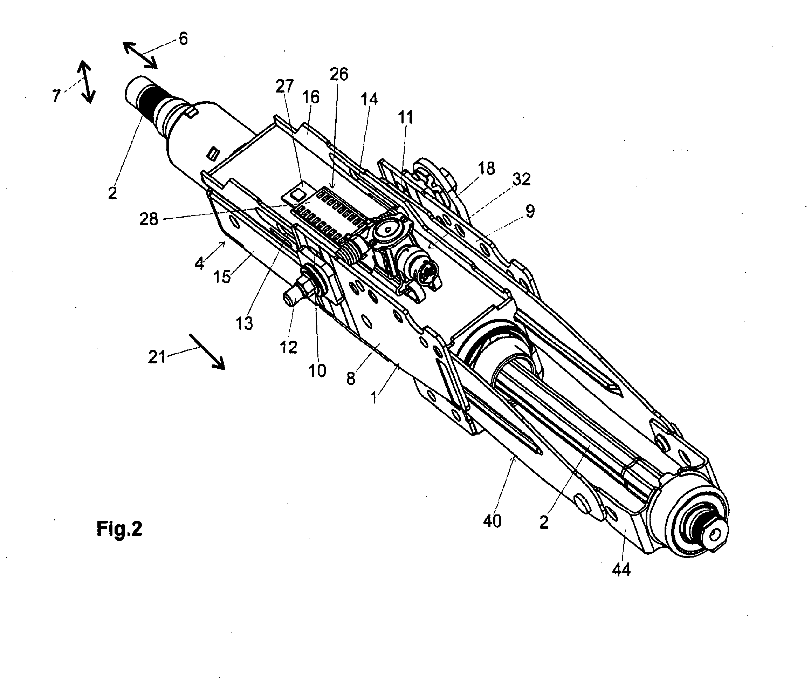

Ein Ausführungsbeispiel einer Lenksäule gemäß der Erfindung ist in den Fig. 1 bis 7 dargestellt.

Die Lenksäule umfasst eine Manteleinheit 4, die einen an ein lenkradseitiges Ende 3 anschließenden Abschnitt der Lenkspindel 2 drehbar lagert. Die Manteleinheit 4 wird von einer Trageinheit 1 getragen, die am Chassis eines Kraftfahrzeugs befestigbar ist. Die Trageinheit 1 weist beidseitig der Manteleinheit 4 angeordneten Seitenwangen 8, 9 auf, welche oberhalb oder unterhalb der Manteleinheit 4 durch einen Verbindungsschenkel miteinander verbunden sein können (nicht dargestellt in den Figuren).

Im geöffneten Zustand einer Spannvorrichtung 5 ist die Lenksäule in ihrer Längsrichtung 6 (=axiale Richtung desvon der Manteleinheit 4 drehbar gelagerten Abschnitts der Lenkspindel 2) und in Richtung 7 der Höhe bzw. Neigung verstellbar. Hierbei ist die Manteleinheit 4 gegenüber der Trageinheit 1 in die Längsrichtung 6 und in die Richtung 7 der Höhen- bzw. Neigungsverstellung verstellbar.

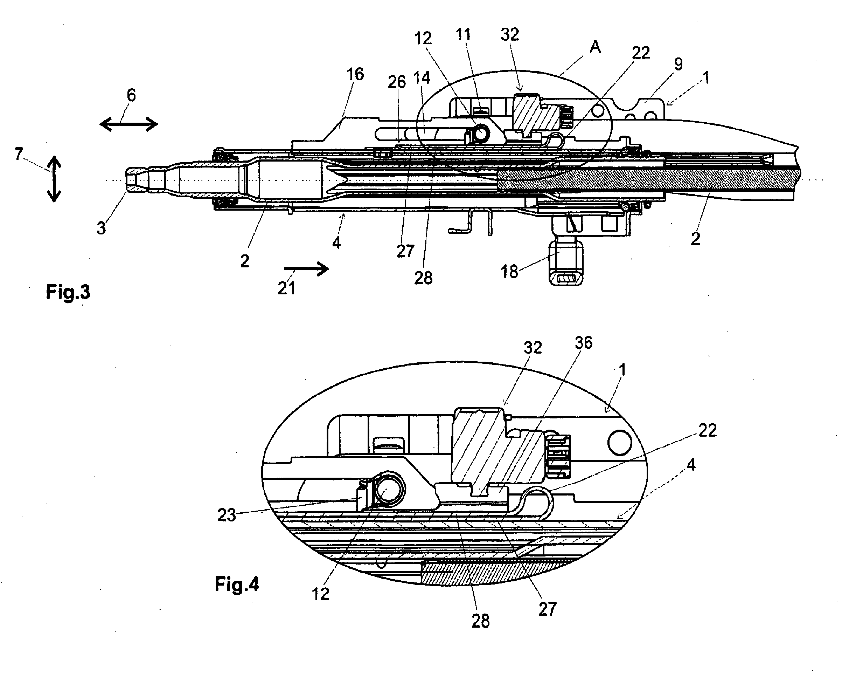

Zur Ermöglichung der Längenverstellung der Lenksäule besitzt die Lenkspindel 2 gegeneinander teleskopierbare Abschnitte (in Fig. 3 ersichtlich).

Die Spannvorrichtung 5 umfasst einen Spannbolzen 12, der quer, insbesondere rechtwinkelig, zur axialen Richtung des von der Manteleinheit 4 gelagerten Abschnitts der Lenkspindel 2 verläuft und Öffnungen 10, 11 in den Seitenwangen 8, 9 der Trageinheit 1 sowie Öffnungen 13, 14 in Seitenwangen 15, 16 der Manteleinheit 4 durchsetzt. Die Öffnungen 10, 11 in den Seitenwangen 8, 9 der Trageinheit 1 sind in Form von Langlöchern ausgebildet, die sich in Richtung 7 der Höhen- bzw. Neigungsverstellung erstrecken. Die Öffnungen 13, 14 in den Seitenwangen 15, 16 der Manteleinheit 4 sind in Form von Langlöchern ausgebildet, die sich in die Längsrichtung 6 erstrecken.

Der Spannbolzen 12 wird durch die Ränder der von ihm durchsetzten Öffnungen 10, 11 in den Seitenwangen 8, 9 der Trageinheit 1 in einer jeweiligen eingestellten Höhen- bzw. Neigungsposition der Lenksäule in Längsrichtung 6 der Lenksäule unverschiebbar gehalten.

Zwischen der Trageinheit 1 und der Manteleinheit 4 ist im gezeigten Ausführungsbeispiel eine Zwischeneinheit 40 angeordnet. Diese weist Seitenwangen 41,42 auf, die zwischen der jeweiligen Seitenwange 8, 9 der Trageinheit 1 und der Manteleinheit 4 angeordnet sind. Der Spannbolzen 12 durchsetzt Rundlöcher in den Seitenwangen 41, 42. Die Zwischeneinheit ist gegenüber der Trageinheit 1 um eine Schwenkachse 30 in die Richtung 7 der Höhen- bzw. Neigungsverstellung verschwenkbar. Die Verschwenkbarkeit um die Schwenkachse 30 erfolgt gegenüber einem Haltebügel 44, der auf der gegenüber ihm drehbaren Lenkspindel 2 angeordnet ist. Anstelle eines separaten Haltebügels 44 könnten auch verlängerte Abschnitte der Seitenwangen 8, 9 vorhanden sein. In Längsrichtung 6 der Lenksäule sind die Seitenwangen 41, 42 der Zwischeneinheit 40 gegenüber der Manteleinheit 4 durch vorspringende Stege geführt, die in Längsnuten 43 an den Seitenflächen der Manteleinheit 4 eingreifen.

Im geschlossenen Zustand der Spannvorrichtung 5 werden die Seitenwangen 8, 9 der Trageinheit 1 beidseitig gegen die Seitenwangen 41, 42 der Zwischeneinheit und diese gegen die Manteleinheit 4 verspannt, wobei die zusammenwirkenden Reibflächen reibschlüssig wirkende Arretierelemente der Spannvorrichtung 5 darstellen. Auf dem Spannbolzen angeordnete, gegen die Außenseiten der Seitenwangen 8, 9 angedrückte Andruckteile 17 bilden weitere mit den Seitenwangen 8, 9 zusammenwirkende Reibflächen aus, wodurch weitere reibschlüssig wirkende Arretierelemente der Spannvorrichtung 5 gebildet werden. Prinzipiell denkbar und möglich wäre es, weitere Reibflächen durch zusammenwirkende Lamellen auszubilden, oder alternativ auch Arretierelemente durch formschlüssige Verzahnungen auszubilden, wie dies bekannt ist.

Zum Öffnen und Schließen der Spannvorrichtung 5 dient ein Betätigungshebel 18, durch dessen Verschwenkung in bekannter Weise eine mit einer Gegenscheibe 19 (=Keilscheibe) zusammenwirkende Nockenscheibe 20 verdreht wird, wobei beim Schließen der Spannvorrichtung 5 die beiden Scheiben 19, 20 auseinandergespreizt werden.

Die Arretierelemente der Spannvorrichtung 5 werden somit durch eine achsiale Verschiebung des Spannbolzens 12 bzw. durch eine achsiale Verschiebung gegenüber dem Spannbolzen 12 miteinander in Eingriff gebracht.

Anstelle eines Betätigungshebels 18 könnte auch eine andere Betätigung, beispielsweise elektrische Betätigung der Spannvorrichtung 5 vorgesehen sein. Anstelle einer Keil- oder Nockenscheibe 20 könnte auch ein anderer Mechanismus zur achsialen Verschiebung des Spannbolzens 12 bzw. zur achsialen Verschiebung von Arretierelementen gegenüber dem Spannbolzen 12 vorgesehen sein, beispielsweise Systeme mit Wälzkörpern, die in Nockenbahnen laufen.

Durch eine drehfeste Verbindung des Betätigungshebels 18 mit dem Spannbolzen 12 wird dieser beim Öffnen und Schließen der Spannvorrichtung 5 um seine Achse gedreht.

Auf dem Spannbolzen 12 sind Halteteile 23 angeordnet. Diese befinden sich im Bereich zwischen den Seitenwangen 8, 9 der Trageinheit 1. Die Halteteile 23 sind gegenüber dem Spannbolzen 12 um dessen Achse verschwenkbar auf dem Spannbolzen 12 angeordnet, günstigerweise indem wie dargestellt der Spannbolzen 12 eine Öffnung im jeweiligen Halteteil 23 durchsetzt. Die in der Darstellung gezeigten zwei Halteteile 23 können auch als einteiliges Halteteil ausgebildet sein.

Auf dem Spannbolzen 12 ist weiters ein Federelement 24 angeordnet. Dieses weist beidseitig der Halteteile 23 den Spannbolzen 12 schraubenfederartig umgebende Abschnitte 24a, 24b und einen diese verbindenden Bügelabschnitt 24c auf, wobei die Abschnitte 24a, 24b, 24c aus einem durchgehenden Federdraht bestehen. Die Abschnitte 24a, 24b sind unverdrehbar mit dem Spannbolzen 12 verbunden, beispielsweise klemmend, durch Formschluss oder durch Stoffschluss, z.B. Verklebung oder Punktverschweißung. Der Bügelabschnitt 24c erstreckt sich durch eine Nut 25 im jeweiligen Halteteil 23.

Dadurch werden die Halteteile 23 ohne einwirkende äußere Kraft in einer bestimmten Winkellage gegenüber dem Spannbolzen 12 gehalten und sind gegen die Rückstellkraft des Federelements 24 aus dieser Winkellage auslenkbar.

Die Trageinheit 1 und die Manteleinheit 4 bilden, wie weiter unten noch genauer erläutert, erste und zweite Teile der Lenksäule, die im Falle eines Fahrzeugcrashs in die Verschieberichtung 21 unter Energieabsorption gegeneinander (=relativ zueinander) verschiebbar sind. Die Verschieberichtung 21 liegt parallel zur Längsrichtung 6 bzw. zur axialen Richtung des von der Manteleinheit 4 gelagerten Abschnitts der Lenkspindel 2.

Zwischen der Manteleinheit 4 und der Trageinheit 1 wirkt bei ihrer gegenseitigen Verschiebung im Crashfall ein Absorptionselement 26, durch welches bei der gegenseitigen Verschebung dieser beiden Teile Energie aufgezehrt wird.

Ein erster Abschnitt 27 des Absorptionselements 26 ist an der Manteleinheit 4 zumindest bezogen auf die Verschieberichtung 21 unverschiebbar gehalten. Beispielsweise kann der erste Abschnitt 27 mit der Manteleinheit 4 vernietet sein, an dieser angeschweißt sein, durch ein Befestigungsclips an dieser gehalten sein oder auch einstückig mit dieser ausgebildet sein (z.B. könnte das Absorptionselement von einem herausgestanzten, gebogenen Lappen gebildet sein). Bei der gegenseitigen Verschiebung zwischen der Trageinheit 1 und der Manteleinheit 4 im Crashfall ist weiters ein zweiter Abschnitt 28 des Absorptionselements 26 bezogen auf die Verschieberichtung 21 unverschiebbar gegenüber der Trageinheit 1 gehalten. Die ersten und zweiten Abschnitte 27, 28 werden im gezeigten Ausführungsbeispiel von ersten und zweiten Schenkeln gebildet, die über eine Umbiegung 22 (=einen umgebogenen Abschnitt) miteinander verbunden sind. Insgesamt ergibt sich eine im Wesentlichen U-förmige Ausbildung, wobei der erste und der zweite Schenkel parallel zueinander verlaufen und mit ihren Breitseiten übereinanderliegen, vorzugsweise aufeinander aufliegen. Die beiden Schenkel des Absorptionselements 26 erstrecken sich in die Längsrichtung 6 bzw. Verschieberichtung 21.

Zur im Crashfall unverschiebbaren Halterung des zweiten Abschnitts 28 gegenüber der Trageinheit 1 dienen zwei Reihen von in die Längsrichtung 6 der Lenksäule mit jeweiligem Abstand aufeinander folgenden Eingriffselementen 29, die im zweiten Abschnitt 28 ausgebildet sind und mit denen die Halteteile 23 im geschlossenen Zustand der Spannvorrichtung 5 zusammenwirken. Im gezeigten Ausführungsbeispiel werden diese Eingriffselemente 29 von durch das Material des Absorptionselements 26 durchgehenden, schlitzförmigen Ausnehmungen gebildet, in welche eine vorspringende Nase 31 des jeweiligen Halteteils 23 einführbar ist. Die Ausnehmungen könnten beispielsweise auch in Form von nutartigen Vertiefungen oder einfach als gestanzte Löcher ausgeführt sein.

Im geöffneten Zustand der Spannvorrichtung 5 ist das Halteteil 23 vom zweiten Abschnitt 28 des Absorptionselements 26 abgehoben. Durch die Verdrehung des Spannbolzens 12 beim Schließen der Spannvorrichtung 5 werden die Halteteile 23 an den zweiten Abschnitt 28 des Absorptionselements 26 angedrückt, unter Vorspannung des Federelements 24. Hierbei können zwei Fälle auftreten: Einerseits kann die gegenseitige Lage zwischen jeweiligem Halteteil 23 und Absorptionselement 26 (aufgrund der momentanen Einstellposition der Lenksäule in Längsrichtung) gerade so sein, dass das Halteteil 23 in eines der Eingriffselemente 29 eingreift, sodass sofort ein formschlüssiger Eingriff zwischen dem Halteteil 23 und dem zweiten Abschnitt 28 des Absorptionselements 26 ausgebildet wird. Andererseits kann die Nase 31 auf einen Steg zwischen zwei aufeinanderfolgenden Eingriffselementen 29 zu liegen kommen. In diesem Fall wird das Halteteil 23 durch die Federkraft des Federelements 24 an des zweiten Abschnitts 28 des Absorptionselements 26 angedrückt. Sollte es in der letztbeschriebenen Lage des Halteteils 23 zu einem Fahrzeugcrash kommen, durch den die von den Arretierelementen des Spannvorrichtung 5 bewirkte Haltekraft der Manteleinheit 4 gegenüber der Trageinheit 1 überschritten wird, so würde eine Verschiebung der Manteleinheit 4 gegenüber der Trageinheit 1 einsetzen, bis die Nase 31 in den Bereich oberhalb eines Eingriffselements 29 gelangt, worauf sie durch die Federkraft des Federelements 24 in Eingriff mit dem Eingriffselement 29 gebracht wird.

Entweder gleich nach dem Schließen des Spannvorrichtung 5 oder zumindest nach einer anfänglichen geringen Verschiebung der Manteleinheit 4 gegenüber der Trageinheit 1, welche kleiner als der Abstand von zwei aufeinanderfolgenden Eingriffselementen 29 ist, kommt es somit im Crashfall zu einem formschlüssigen Eingriff des Halteteils 23 mit dem zweiten Abschnitt 28 des Absorptionselements 26. In der weiteren Folge ist bei der Verschiebung der Manteleinheit 4 gegenüber der Trageinheit 1 im Crashfall der zweite Abschnitt 28 des Absorptionselements 26 unverschiebbar gegenüber der Trageinheit 1 gehalten.

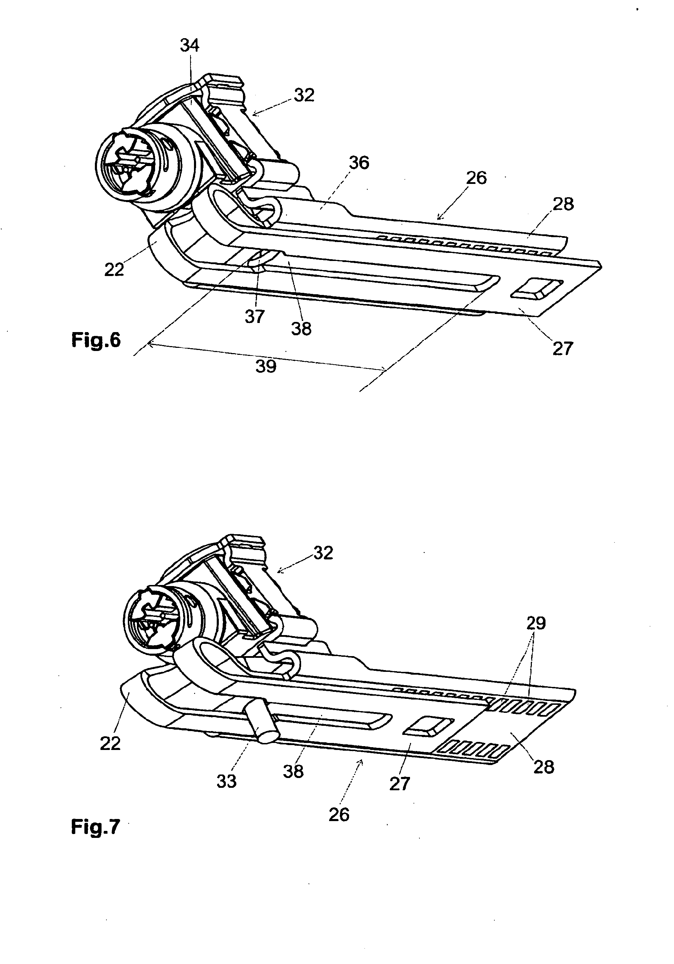

Wenn im Falle eines Fahrzeugcrashs durch die sekundäre Kollision des Fahrers die auf die Manteleinheit 4 in Richtung zur Fahrzeugfront einwirkenden Kräfte ausreichend hoch sind, so kommt es zu einer Verschiebung der Manteleinheit 4 gegenüber der Trageinheit 1 in die Verschieberichtung 21 (=in die Längsrichtung 6 der Lenksäule). Hierbei werden die von den Arretierelementen der Spannvorrichtung 5 bewirkten Haltekräfte, die die Manteleinheit 4 gegenüber der Trageinheit 1 halten, überschritten. Weiters wird vom Absorptionselement 26 Energie absorbiert. Der erste Abschnitt 27 wird mit der Manteleinheit 4 von dieser mitgenommen und der zweite Abschnitt 28 wird gegenüber der Trageinheit 1 festgehalten. Bei der gezeigten Ausbildung des Absorptionselements 26 in Form eines Biegestreifens kommt es hierbei zu einer am Biegestreifen ausgeführten Biegearbeit, wobei sich die Stelle der Umbiegung 22 entlang des Biegestreifens verschiebt (vgl. Fig. 7 im Vergleich zu Fig. 6).

Anstelle eines reinen Biegestreifens könnte das Absorptionselement 26 beispielsweise auch als kombinierter Reiß- und Biegestreifen ausgebildet sein. Hierzu könnte z.B. der erste Abschnitt 27 eine mit der Manteleinheit 4 verbundene Grundplatte aufweisen, aus der bei der Verschiebung der Manteleinheit 4 gegenüber der Trageinheit 1 ein Streifen herausreißbar ist. Um die Ränder des herauzureißenden Streifens vorzugeben, könnten in der Grundplatte entsprechende Schwächungslinien vorgesehen sein.

Um die durch das Absorptionselement 26 bewirkte Energieabsorption beeinflussen zu können, ist eine Schalteinheit 32 vorgesehen, die im gezeigten Ausführungsbeispiel von einem pyrotechnischen Schalter ("Pyroswitch") gebildet wird. Die Schalteinheit 32 weist ein zwischen einer passiven Schaltstellung (Fig. 6) und einer aktiven Schaltstellung (Fig. 7) verstellbares stiftförmiges Schaltstück 33 auf. In seiner passiven Schaltstellung ist das Schaltstück 33 zurückgezogen in seiner aktiven Schaltstellung herausgeschoben.

Das Gehäuse 34 der Schalteinheit 32 ist am zweiten Abschnitt 28 des Absorptionselements 26 befestigt, und zwar zwischen dem Bereich, in welchem sich die Eingriffselemente 29 befinden und der Umbiegung 22. Zur Befestigung der Schalteinheit 32 können beispielsweise von den Seitenrändern des den zweiten Abschnitt 28 bildenden Schenkels ausgehende Befestigungsflansche 35, 36 vorgesehen sein, mit denen das Gehäuse 34, beispielsweise durch Punktschweißen, verbunden ist.

In seiner aktiven Schaltstellung ragt das stiftförmige Schaltstück 33 durch eine Öffnung 37 im zweiten Abschnitt 28 in eine Öffnung 38 im ersten Abschnitt 27. Die Öffnung 38 im ersten Abschnitt 27 ist als in die Verschieberichtung 21 verlaufendes Langloch ausgebildet. In der Ausgangsstellung (wenn es noch nicht zu einem Fahrzeugcrash gekommen ist) ragt das Schaltstück 33 in seiner aktiven Schaltstellung durch einen Bereich der Öffnung 38, dessen Breite ausreichend groß ist, sodass das Schaltstück 33 durchtreten kann. An diesen Bereich der Öffnung 38 mit der größeren Breite schließt ein Bereich der Öffnung 38 mit einer Breite an, die geringer als der Durchmesser des Schaltstücks 33 ist. Im Crashfall wird das Schaltstück 33 in diesen Bereich mit der geringeren Breite unter Aufweitung der Öffnung 38 in diesem Bereich verschoben, wobei entsprechend Energie absorbiert wird. Fig. 7 zeigt einen möglichen Zustand nach einem Fahrzeugcrash, wobei das Schaltstück 33 die Öffnung 38 über einen Abschnitt ihrer Länge mit der geringeren Breite aufgeweitet hat. Der Bereich, über den das Schaltstück 33 in der Ausgangsstellung (ohne einen Fahrzeugcrash) und im Laufe eines Fahrzeugcrashes zu liegen kommen kann, wird als Eingriffsbereich 39 bezeichnet (vgl. Fig. 6).

Die Breite der Öffnung kann über seine Länge variieren, so dass ein definierter Kraftverlauf durch das Design der Öffnung einstellbar ist.

Anstelle eines Aufweitens einer Öffnung 38 durch das Schaltstück 33 kann beispielsweise auch ein Vergrößern einer Öffnung durch Aufreißen des Materials des Absorptionselements 26 vorgesehen sein. Die Öffnung erstreckt sich in diesem Fall nicht über die gesamte Länge des Eingriffsbereichs 39. Im aufzureißenden Bereich kann eine entsprechende Schwächung im Material des Absorptionselements 26 ausgebildet sein, beispielsweise durch eine die Wandstärke verringernde Nut oder durch eine durch einen Teil der Wanddicke verlaufende Einstanzung. Auch eine Kombination eines Aufweitens und eines Aufreißens kann vorgesehen sein, beispielsweise kann über einen ersten Abschnitt der Verschiebung des Schaltstücks 33 im Eingriffsbereich 39 ein Aufweiten der Öffnung 38 vorgesehen sein und in einem daran anschließenden zweiten Abschnitt ein Vergrößern der Öffnung 38 durch Aufreißen des Materials des Absorptionselements 26 vorgesehen sein. Auch andere energieaufzehrende Absorptionsmechanismen können vorgesehen sein, beispielsweise ein Reiben oder Schaben des Schaltstücks 33 über die Oberfläche des ersten Abschnitts 27.

Die Öffnung 37 im zweiten Abschnitt 28 ist vorzugsweise in Form eines Rundlochs ausgebildet. Bei der energieaufzehrenden Verschiebung des Schaltstücks 33 entlang des Eingriffsbereichs 39 des zweiten Abschnitts 28 wird hierbei das Schaltstück 33 vom Rand der Öffnung 38 abgestützt

Die Größe der Energieabsorption bei der Verschiebung der Manteleinheit 4 gegenüber der Trageinheit 1 im Falle eines Fahrzeugcrashs kann mittels der Schalteinheit 32 somit verändert werden. Wenn sich das Schaltstück 33 in seiner aktiven Schaltstellung befindet, so ist die zur Verschiebung der Manteleinheit 4 gegenüber der Trageinheit 1 erforderliche Kraft aufgrund der hierbei absorbierten Energie zwischen dem Schaltstück 33 und dem Absorptionselement 26 höher als in der passiven Schaltstellung des Schaltstücks 33, wenn dieses nicht im Eingriff mit dem ersten Abschnitt 27 des Absorptionselements 26 steht.

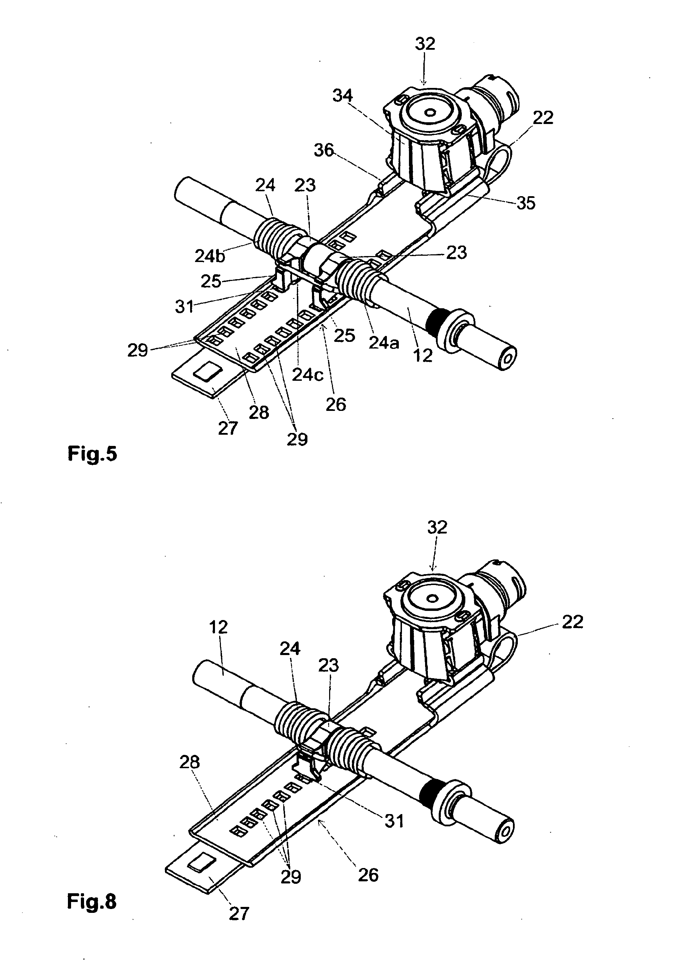

Unterschiedliche Modifikationen des in den Fig. 1 bis 7 dargestellten Ausführungsbeispiels sind denkbar und möglich ohne den Bereich der Erfindung zu verlassen. So zeigt beispielsweise Fig. 8 eine Ausführungsvariante, bei der im zweiten Abschnitt 28 des Absorptionselements 26 nur eine einzelne in die Längsrichtung 6 verlaufende Reihe von Eingriffselementen 29 vorgesehen ist, mit denen ein Halteteil 23 zusammenwirkt. Auch mehr als zwei Reihen von Eingriffselementen 29 könnten in einer anderen Ausführungsvariante vorgesehen sein.

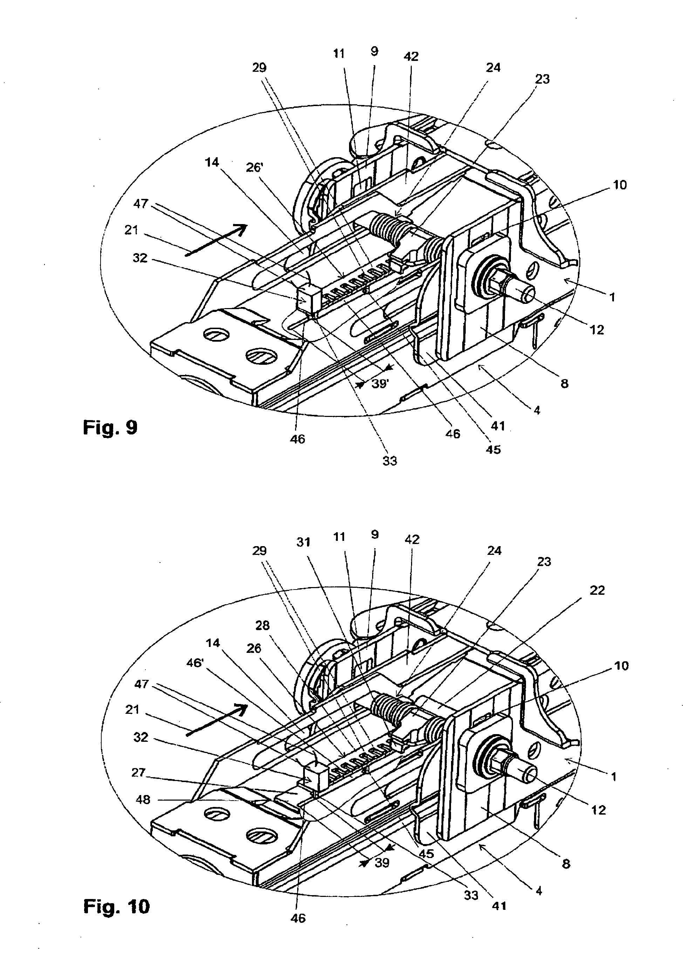

Fig. 9 zeigt eine weitere mögliche Ausbildungsform. Hier weist das Absorptionselement 26' eine Platte auf, die mit einer Reihe von Eingriffselementen 29 versehen ist, um mit dem Halteteil 23 zusammenzuwirken. Bei der Verschiebung der Manteleinheit 4 gegenüber der Trageinheit 1 im Crashfall wird das Absorptionselement 26' vom Halteteil 23 unverschiebbar gegenüber der Trageinheit 1 gehalten (zumindest nach einer anfänglichen geringen Verschiebung bis das Halteteil 23 in Eingriff mit einem Eingriffselement 29 gekommen ist). Das Absorptionselement 26' besitzt weiters einen an der Unterseite der Platte angebrachten Bolzen 45, der in ein Langloch 46 eingreift, welches in der Manteleinheit 4 ausgebildet ist. Die Lochbreite des Langlochs 46 ist bereichsweise schmaler als der Außendurchmesser des Bolzens 45 und wenn es im Crashfall zu einer Verschiebung der Manteleinheit 4 gegenüber der Trageinheit 1 kommt, so wird das Langloch 46 vom Bolzen 45 unter Energieabsorption aufgeweitet.

Am Absorptionselement 26' ist das Gehäuse 34 einer Schalteinheit 32 befestigt. Die Schalteinheit 32 wird mit dem elektrischen Anschluss 47 angesteuert. Das Schaltstück 33 der Schalteinheit 32 ragt in seiner aktiven Schaltstellung durch eine Öffnung im Absorptionselement 26' in das Langloch 46 und zwar in einen Bereich des Langlochs 46, der eine gegenüber dem Bereich, durch den der Bolzen 45 in der Grundstellung (ohne dass ein Fahrzeugcrash aufgetreten ist) ragt, geringere Breite aufweist. An diesen Bereich mit der geringeren Breite schließt ein Bereich mit einer noch geringeren Breite des Langlochs 46 an. Im Falle eines Fahrzeugcrashs kann sich das Schaltstück 33 in diesen letztgenannten Bereich hinein unter Aufweitung der Breite des Langlochs 46 verschieben, wobei es zu einer Energieabsorption kommt. Der Bereich, über den das Schaltstück 33 mit der Manteleinheit in der Grundstellung und im Falle eines Fahrzeugcrashs zusammenwirken kann, wird als Eingriffsbereich 39' bezeichnet.

Die Ausführungsform entsprechend der Fig. 10 unterscheidet sich von der Ausführungsform, wie sie in der Fig. 9 veranschaulicht ist, dadurch, dass das Schaltstück 33 der Schalteinheit 32 in ein Langloch 46 des an der Manteleinheit 4 befestigten ersten Abschnitts 27 des Absorptionselements 26 eingreift. Bei Verschiebung der Manteleinheit 4 im Crashfall wird der erste Abschnitt 27 mit der Manteleinheit 4 gegenüber der Trageinheit 1 verschoben. Der zweite Abschnitt 28 wird über die Nase 31 des Halteteils 23 mit der Trageinheit unverschiebbar verbunden. Bei der Verschiebung der beiden Abschnitte 27, 28 des Absorptionslements 26 zueinander wird die Umbiegung 22 verformt und das Schaltstück 33 verformt den Eingriffsbereich 39 des Langlochs 46, so dass Energie dissipiert wird.

Der erste Abschnitt 27 des Absorptionselements kann mit der Manteleinheit 4 verschweißt mit einer Schweißnaht 48, vernietet oder auf andere Weise verbunden werden. Es ist auch denkbar und möglich, die Verbindung über einen Stift 45 der in ein Langloch 46' eingepresst ist, und sich unter Verformung des Langlochs 46' im Crashfall in Längsrichtung verschiebt und zusätzlich Energie absorbiert. Auf diese Weise kann der mögliche Verschiebeweg, bei dem eine Energieaufzehrung erfolgen kann, verlängert werden oder auch ein weiteres Energieniveau für die Absorption dargestellt werden. So kann es vorgesehen sein, in einem ersten Schritt die Umformung der Umbiegung 22, in einem zweiten Schritt die Aufweitung des Eingriffsbereichs 39 des Langlochs 46 durch das Schaltstück 33 der Schalteinheit 32 und in einem dritten Schritt das Aufweiten des Langlochs 46' durch den Befestigungsbolzen 45 vorzusehen. Durch die Möglichkeit das Schaltstück 33 der Schalteinheit 32 aus dem Eingriffsbereich herauszuziehen (=passive Schaltstellung), kann der zweite Schritt der Absorption übersprungen werden.

Wenn sich das Schaltstück 33 in seiner aktiven Schaltstellung befindet, kommt es somit im Crashfall bei einer Verschiebung der Manteleinheit 4 gegenüber der Trageinheit 1 zu einer größeren Energieabsorption als im Falle der passiven Schaltstellung des Schaltstücks 33, in welcher dieses aus dem Langloch 46 zurückgezogen ist.

Grundsätzlich denkbar und möglich wäre es auch, ein Absorptionselement vorzusehen, welches sich im Crashfall mit der Manteleinheit 4 mitbewegt und durch Zusammenwirken mit der Trageinheit 1 Energie absorbiert. Das Schaltstück 33, welches wieder am Absorptionselement angebracht wäre, könnte in diesem Fall in seiner Aktivstellung ebenfalls mit einem Eingriffsbereich der Trageinheit 1 zusammenwirken.

Durch die Befestigung der Schalteinheit 32 am Absorptionselement 26, 26' wird eine Vormontage ermöglicht, bevor diese Teile in die Lenksäule eingebaut werden. Es wird hierdurch eine Montageerleichterung erreicht. Auch kann ein Funktionstest außerhalb der Lenksäule durchgeführt werden.

Die zwischen der Trageinheit 1 und der Manteleinheit 4 in den dargestellten Ausführungsbeispielen vorhandene Zwischeneinheit 40 könnte auch entfallen. Die Seitenwangen 8, 9 der Trageinheit könnten dann im geschlossenen Zustand der Spannvorrichtung 5 direkt an die Manteleinheit 4 beidseitig angedrückt sein. Die Schwenkachse zwischen der Manteleinheit 4 und der Trageinheit 1 könnte in diesem Fall beispielsweise auch von einem Kardangelenk gebildet werden, über welches zwei Abschnitte der Lenkspindel 2 verbunden sind. Weiters könnte diese Schwenkachse von einem an der Trageinheit 1 angebrachten Schwenkbolzen gebildet werden, der ein sich in die Längsrichtung 6 erstreckendes Langloch in der Manteleinheit 4 durchsetzt.

Die Erfindung ist auch bei Lenksäulen einsetzbar, die nur in Längsrichtung 6 verstellbar sind. Der Spannbolzen 12 könnte dann in Form von Rundlöchern ausgebildete Öffnungen 10, 11 in den Seitenwangen 8, 9 der Trageinheit 1 durchsetzen.

Die die Öffnungen 13, 14 aufweisenden, nach oben überstehenden Abschnitte der Seitenwangen 15, 16 der Trageinheit 4 könnten auch entfallen, sodass der Spannbolzen 12 keine Öffnungen 13, 14 in der Trageinheit 4 durchsetzt.

Anstelle einer pyrotechnischen Schalteinheit 32 könnte auch eine in anderer Weise aktivierbare Schalteinheit vorgesehen sein, beispielsweise eine elektromagnetische, magnetische, elektrische, pneumatische oder hydraulische Schalteinheit.

Die beiden Teile, die im Crashfall gegeneinander in die Verschieberichtung 21 verschiebbar sind und zwischen denen ein Absorptionselement 26, 26' zur Absorption von Energie im Crashfall wirkt, werden erfindungsgemäß von der Trageinheit 1 und der die Lenkspindel 2 drehbar lagernden Manteleinheit 4 gebildet.

Zwischen den beiden im Crashfall in die Verschieberichtung bzw. Längsrichtung verschiebbaren Teilen könnte auch mehr als ein Absorptionselement zur Aufzehrung von Energie bei der Verschiebung vorgesehen sein.

Es könnte auch mehr als eine Schalteinheit 32 vorgesehen sein, um die Höhe der Energieabsorption bei der Verschiebung der beiden Teile in der beschriebenen Weise zu verändern, wodurch mehr als zwei Niveaus für die Energieabsorption bereitgestellt werden können.

Es können auch mehrere Energieabsorptionselemente, wovon eines oder mehrere mit jeweils einem oder mehreren Schalteinheiten bestückt sind, vorgesehen sein. Ebenso ist es denkbar und möglich, mehrere Energieabsorptionselemente nebeneinander einstückig, beispielsweise als Blech-Stanz-Biegeteil, auszubilden.

Auch wenn die mit dem Halteteil zusammenwirkenden Eingriffselemente des Absorptionselements in den Fig. als Aussparungen dargestellt sind, ist es auch denkbar und möglich Eingriffselemente in Form von Vorsprüngen vorzusehen, mit denen das Halteelement zusammenwirkt.

### Legende

### zu den Hinweisziffern:

- 1: Trageinheit
- 2: Lenkspindel
- 3: lenkradseitiges Ende
- 4: Manteleinheit
- 5: Spannvorrichtung
- 6: Längsrichtung
- 7: Richtung
- 8: Seitenwange
- 9: Seitenwange
- 10: Öffnung
- 11: Öffnung
- 12: Spannbolzen
- 13: Öffnung
- 14: Öffnung
- 15: Seitenwange
- 16: Seitenwange
- 17: Andruckteil
- 18: Betätigungshebel
- 19: Gegenscheibe
- 20: Nockenscheibe
- 21: Verschieberichtung
- 22: Umbiegung
- 23: Halteteil
- 24: Federelement
- 24a: Abschnitt
- 24b: Abschnitt
- 24c: Bügelabschnitt
- 25: Nut
- 26, 26': Absorptionselement
- 27: erster Abschnitt
- 28: zweiter Abschnitt
- 29: Eingriffselement
- 30: Schwenkachse
- 31: Nase
- 32: Schalteinheit
- 33: Schaltstück
- 34: Gehäuse
- 35: Befestigungsflansch
- 36: Befestigungsflansch
- 37: Öffnung
- 38: Öffnung
- 39, 39': Eingriffsbereich
- 40: Zwischeneinheit
- 41: Seitenwange
- 42: Seitenwange
- 43: Längsnut
- 44: Haltebügel
- 45: Bolzen
- 46, 46': Langloch
- 47: Elektrischer Anschluss
- 48: Schweißnaht

## Patentansprüche

1. Lenksäule für ein Kraftfahrzeug umfassend
eine einen Abschnitt der Lenkspindel (2) drehbar lagernde Manteleinheit (4) und eine am Fahrzeugchassis befestigbare Trageinheit (1), von der die Manteleinheit (4) getragen wird, wobei im Falle eines Fahrzeugcrashes die Manteleinheit (4) gegenüber der Trageinheit (1) in eine in Längsrichtung der Lenksäule ausgerichtete Verschieberichtung (21) unter Energieabsorption verschiebbar ist,
mindestens ein zwischen der Manteleinheit (4) und der Trageinheit (1) wirkendes Absorptionselement (26, 26') mittels dem bei der Verschiebung der Manteleinheit (4) gegenüber der Trageinheit (1) im Crashfall Energie absorbiert wird, und mindestens eine Schalteinheit (32), welche ein zwischen einer passiven und einer aktiven Schaltstellung umschaltbares Schaltstück (33) aufweist,
wobei die beim Verschieben der Manteleinheit (4) gegenüber der Trageinheit (1) im Crashfall absorbierte Energie in der aktiven Schaltstellung des Schaltstücks (33) größer als in der passiven Schaltstellung des Schaltstücks (33) ist, indem das Schaltstück (33) in seiner aktiven Schaltstellung in einen Eingriffsbereich (39) des Absorptionselements (26, 26') oder in einen Eingriffsbereich (39') der Manteleinheit (4) oder in einen Eingriffsbereich der Trageinheit (1) eingreift und in der aktiven Schaltstellung des Schaltstücks (33) bei einer Verschiebung der Manteleinheit (4) gegenüber der Trageinheit (1) im Crashfall eine zusätzliche Energieabsorption durch eine gegenseitige energieabsorbierende Verschiebung zwischen dem Schaltstück (33) und zumindest einem Abschnitt (27) des Absorptionselements (26) im Eingriffsbereich (39) des Absorptionselements (26) oder zwischen dem Schaltstück (33) und der Manteleinheit (4) im Eingriffsbereich (39') der Manteleinheit (4) oder zwischen dem Schaltstück (33) und der Trageinheit (1) im Eingriffsbereich der Trageinheit (1) erfolgt,
**dadurch gekennzeichnet, dass** die Lenksäule eine Spannvorrichtung (5) umfasst, in deren geöffnetem Zustand die Manteleinheit (4) gegenüber der Trageinheit (1) zur Längenverstellung der Lenksäule verstellbar ist und in deren geschlossenem Zustand die eingestellte Position der Manteleinheit (4) gegenüber der Trageinheit (1) festgestellt ist, und dass ein Gehäuse (34) der Schalteinheit (32) am Absorptionselement (26, 26') befestigt ist.

2. Lenksäule nach Anspruch 1, **dadurch gekennzeichnet, dass** bei der Verschiebung der Manteleinheit (4) gegenüber der Trageinheit (1) im Crashfall ein erster Abschnitt (27) des Absorptionselements (26) gegenüber dem ersten dieser beiden Teile (1, 4) unverschiebbar gehalten ist und ein zweiter Abschnitt (28) des Absorptionselements (26) gegenüber dem zweiten dieser beiden Teile (1, 4) unverschiebbar gehalten ist.

3. Lenksäule nach Anspruch 1 oder 2, **dadurch gekennzeichnet, dass** das Schaltstück (33) in seiner aktiven Schaltstellung in eine Öffnung (38, 46) im Eingriffsbereich (39) des Absorptionselements (26) oder des Teils (1, 4) mit dem es zusammenwirkt eingreift, wobei das Schaltstück (33) bei der Verschiebung der beiden Teile (1, 4) im Crashfall die Öffnung (38, 46) bereichsweise aufweitet oder die Öffnung (38, 46) durch Aufreißen des Materials des Absorptionselements (26) oder des Teils (1, 4) vergrößert.

4. Lenksäule nach Anspruch 2 oder 3, **dadurch gekennzeichnet, dass** der erste und zweite Abschnitt (27, 28) des Absorptionselements (26) von einem ersten und einem zweiten Schenkel gebildet werden, die über eine Umbiegung (22) des Absorptionselements (26) miteinander verbunden sind.

5. Lenksäule nach Anspruch 4, **dadurch gekennzeichnet, dass** der erste und der zweite Schenkel mit ihren Breitseiten übereinander liegen und parallel zueinander verlaufen.

6. Lenksäule nach einem der Ansprüche 2 bis 5, **dadurch gekennzeichnet, dass** das Schaltstück (33) in seiner aktiven Schaltstellung zum Eingriff in den ersten Abschnitt (27) durch eine Öffnung (37) im zweiten Abschnitt (28) ragt, vorzugsweise vom Rand dieser Öffnung (37) im zweiten Abschnitt 28 bei einer energieabsorbierenden Verschiebung im Eingriffsbereich (39) des ersten Abschnitts (27) abgestützt ist.

7. Lenksäule nach einem der Ansprüche 1 bis 6, **dadurch gekennzeichnet, dass** die Schalteinheit (32) ein pyrotechnisch aktivierbarer Schalter ist.

8. Lenksäule nach einem der Ansprüche 2 bis 7, **dadurch gekennzeichnet, dass** der erste Abschnitt (27) des Absorptionselements (26), in den das Schaltstück (33) in seiner aktiven Schaltstellung eingreift, an der Manteleinheit (4) unverschiebbar gehalten ist.

9. Lenksäule nach einem der Ansprüche 1 bis 8, **dadurch gekennzeichnet, dass** die Spannvorrichtung (5) einen Spannbolzen (12) umfasst, welcher Öffnungen (10, 11) in Seitenwangen (8, 9) der Trageinheit (1) durchsetzt, zwischen denen die Manteleinheit (4) angeordnet ist, und der beim Öffnen und Schließen der Spannvorrichtung (5) um seine Achse gedreht wird, wobei mindestens ein zwischen den Seitenwangen (8, 9) der Trageinheit (1) angeordnetes und durch die Drehung des Spannbolzens (12) beim Öffnen und Schließen der Spannvorrichtung (5) verstelltes Halteteil (23) vorhanden ist, welches im geschlossenen Zustand der Spannvorrichtung (5) am Absorptionselement (26, 26') angreift und welches im geöffneten Zustand der Spannvorrichtung (5) vom Absorptionselement (26) distanziert ist.

10. Lenksäule nach Anspruch 9, **dadurch gekennzeichnet, dass** das Absorptionselement (26) eine Mehrzahl von in Längsrichtung (6) der lenksäule aufeinanderfolgenden Eingriffselementen (29) aufweist, die vorzugsweise von Ausnehmungen gebildet werden, in die zur Ausbildung eines in die Längsrichtung (6) der Lenksäule wirkenden formschlüssigen Eingriffs eine vorspringende Nase (31) des Halteteils (23) einführbar ist.

11. Lenksäule nach einem der Ansprüche 1 bis 10, **dadurch gekennzeichnet, dass** die Verschieberichtung (21) parallel zur axialen Richtung eines an ein lenkradseitiges Ende (3) anschließenden Abschnitts der Lenkspindel (2) ist.

## Claims

1. Steering column for a motor vehicle comprising a jacket unit (4) rotatably supporting a section of the steering spindle (2) and a support unit (1) securable on the vehicle chassis and by which the jacket unit (4) is supported, wherein, in the event of a vehicle crash, the jacket unit (4) is displaceable relative to the support unit (1) in a displacement direction (21) oriented in the longitudinal direction of the steering column, with energy absorption,
at least one absorption element (26, 26') acting between the jacket unit (4) and the support unit (1) by means of which energy is absorbed during the displacement of the jacket unit (4) relative to the support unit (1) in the event of a crash, and
at least one switching unit (32) which comprises a switching piece (33) switchable between a passive and an active switched position,
wherein the energy absorbed during the displacement of the jacket unit (4) relative to the support unit (1) in the event of a crash is greater in the active switched position of the switching piece (33) than in the passive switched position of the switching piece (33), in that the switching piece (33) in its active switched position engages into an engagement region (39) of the absorption element (26, 26') or into an engagement region (39') of the jacket unit (4) or into an engagement region of the support unit (1) and in the active switched position of the switching piece (33) during a displacement of the jacket unit (4) relative to the support unit (1) in the event of a crash, an additional energy absorption occurs through a mutual energy-absorbing displacement between the switching piece (33) and at least one section (27) of the absorption element (26) in the engagement region (39) of the absorption element (26) or between the switching piece (33) and the jacket unit (4) in the engagement region (39') of the jacket unit (4) or between the switching piece (33) and the support unit (1) in the engagement region of the support unit (1),
**characterised in that** the steering column comprises a clamping device (5), in the opened state of which the jacket unit (4) is displaceable relative to the support unit (1) for the length adjustment of the steering column and in the closed state of which the set position of the jacket unit (4) is fixed relative to the support unit (1), and **in that** a housing (34) of the switching unit (32) is secured on the absorption element (26, 26').

2. Steering column according to claim 1, **characterised in that** during the displacement of the jacket unit (4) relative to the support unit (1) in the event of a crash a first section (27) of the absorption element (26) is held nondisplaceably relative to the first of these two parts (1, 4) and a second section (28) of the absorption element (26) is held nondisplaceably relative to the second of these two parts (1, 4).

3. Steering column according to claim 1 or 2, **characterised in that** the switching piece (33) in its active switched position engages into an opening (38, 46) in the engagement region (39) of the absorption element (26) or of the part (1, 4) with which it cooperates, wherein the switching piece (33) during the displacement of the two parts (1, 4) in the event of a crash widens the opening (38, 46) regionally or enlarges the opening (38, 46) by tearing open the material of the absorption element (26) or of the part (1, 4).

4. Steering column according to claim 2 or 3, **characterised in that** the first and second section (27, 28) of the absorption element (26) are formed by a first and a second leg which are connected to one another via a bend (22) of the absorption element (26).

5. Steering column according to claim 4, **characterised in that** the first and the second leg are located with their broad sides one above the other and extend parallel to one another.

6. Steering column according to one of claims 2 to 5, **characterised in that** the switching piece (33) in its active switched position for engagement into the first section (27) projects through an opening (37) in the second section (28), preferably is supported by the margin of this opening (37) in the second section 28 during an energy-absorbing displacement in the engagement region (39) of the first section (27).

7. Steering column according to one of claims 1 to 6, **characterised in that** the switching unit (32) is a pyrotechnically activatable switch.

8. Steering column according to one of claims 2 to 7, **characterised in that** the first section (27) of the absorption element (26), into which the switching piece (33) in its active switched position engages, is held nondisplaceably on the jacket unit (4).

9. Steering column according to one of claims 1 to 8, **characterised in that** the clamping device (5) comprises a clamping bolt (12) which penetrates openings (10, 11) in side plates (8, 9) of the support unit (1) between which the jacket unit (4) is arranged, and which during the opening and closing of the clamping device (5) is rotated about its axis, wherein at least one holding part (23), arranged between the side plates (8, 9) of the support unit (1) and displaced through the rotation of the clamping bolt (12) during the opening and closing of the clamping device (5), is provided, which in the closed state of the clamping device (5) engages on the absorption element (26, 26') and which in the opened state of the clamping device (5) is spaced apart from the absorption element (26).

10. Steering column according to claim 9, **characterised in that** the absorption element (26) comprises a plurality of engagement elements (29) following one another in the longitudinal direction (6) of the steering column, which are preferably formed by cutouts, into which, for the formation of a form-locked engagement acting in the longitudinal direction (6) of the steering column, a projecting nose (31) of the holding part (23) can be introduced.

11. Steering column according to one of claims 1 to 10, **characterised in that** the displacement direction (21) is parallel to the axial direction of a section of the steering spindle (2) adjoining a steering wheel-side end (3).

## Revendications

1. Colonne de direction pour un véhicule automobile, comprenant :
- une unité d'enveloppe (4) supportant de façon rotative une partie de l'arbre de direction (2) et une unité de support (1) apte à être fixée au châssis du véhicule, et par laquelle l'unité d'enveloppe (4) est supportée, dans laquelle, en cas de collision du véhicule, l'unité d'enveloppe (4) peut être déplacée par rapport à l'unité de support (1) dans une direction de déplacement (21) orientée dans la direction longitudinale de la colonne de direction tout en absorbant de l'énergie ;
- au moins un élément d'absorption (26, 26') agissant entre l'unité d'enveloppe (4) et l'unité de support (1), au moyen duquel de l'énergie est absorbée lors du déplacement de l'unité d'enveloppe (4) par rapport à l'unité de support (1) en cas de collision, et au moins une unité de commutation (32) qui présente une pièce de commutation (33) commutable entre une position passive et une position active ;
- dans laquelle l'énergie absorbée lors du déplacement de l'unité d'enveloppe (4) par rapport à l'unité de support (1) en cas de collision est plus grande dans la position active de la pièce de commutation (33) que dans la position passive de la pièce de commutation (33), par le fait que la pièce de commutation (33) est, dans sa position active, en prise dans une région de prise (39) de l'élément d'absorption (26, 26') ou dans une région de prise (39') de l'unité d'enveloppe (4) ou dans une région de prise de l'unité de support (1) et qu'il se produit, dans la position active de la pièce de commutation (33) lors d'un déplacement de l'unité d'enveloppe (4) par rapport à l'unité de support (1) en cas de collision, une absorption d'énergie supplémentaire par un déplacement mutuel absorbant de l'énergie entre la pièce de commutation (33) et au moins une partie (27) de l'élément d'absorption (26) dans la région de prise (39) de l'élément d'absorption (26) ou entre la pièce de commutation (33) et l'unité d'enveloppe (4) dans la région de prise (39') de l'unité d'enveloppe (4) ou entre la pièce de commutation (33) et l'unité de support (1) dans la région de prise de l'unité de support (1) ;
**caractérisée en ce que** la colonne de direction comprend un dispositif de serrage (5), dans l'état ouvert duquel l'unité d'enveloppe (4) est déplaçable par rapport à l'unité de support (1) pour le réglage de la longueur de la colonne de direction et dans l'état fermé duquel la position réglée de l'unité d'enveloppe (4) par rapport à l'unité de support (1) est fixée, et **en ce qu'**un boîtier (34) de l'unité de commutation (32) est fixé à l'élément d'absorption (26, 26').

2. Colonne de direction selon la revendication 1, **caractérisée en ce que**, lors du déplacement de l'unité d'enveloppe (4) par rapport à l'unité de support (1) en cas de collision, une première partie (27) de l'élément d'absorption (26) est maintenue en position immobile par rapport à la première de ces deux parties (1, 4) et une deuxième partie (28) de l'élément d'absorption (26) est maintenue en position immobile par rapport à la deuxième de ces deux parties (1, 4).

3. Colonne de direction selon la revendication 1 ou 2, **caractérisée en ce que** la pièce de commutation (33) est en prise, dans sa position active, dans une ouverture (38, 46) dans la région de prise (39) de l'élément d'absorption (26) ou de la partie (1, 4) avec laquelle elle coopère, dans laquelle la pièce de commutation (33), lors du déplacement des deux parties (1, 4) en cas de collision, élargit localement l'ouverture (38, 46) ou agrandit l'ouverture (38, 46) par arrachement du matériau de l'élément d'absorption (26) ou de la partie (1, 4).

4. Colonne de direction selon la revendication 2 ou 3, **caractérisée en ce que** la première et la deuxième parties (27, 28) de l'élément d'absorption (26) sont formées par une première et une deuxième branches, qui sont assemblées l'une à l'autre par une courbure (22) de l'élément d'absorption (26).

5. Colonne de direction selon la revendication 4, **caractérisée en ce que** la première et la deuxième branches sont superposées par leurs faces larges et s'étendent parallèlement l'une à l'autre.

6. Colonne de direction selon l'une quelconque des revendications 2 à 5, **caractérisée en ce que** la pièce de commutation (33) dans sa position active pénètre, pour venir en prise dans la première partie (27), à travers une ouverture (37) dans la deuxième partie (28), de préférence est soutenue par le bord de cette ouverture (37) dans la deuxième partie (28) lors d'un déplacement absorbant de l'énergie dans la région de prise (39) de la première partie (27).

7. Colonne de direction selon l'une quelconque des revendications 1 à 6, **caractérisée en ce que** l'unité de commutation (32) est un actionneur activable par pyrotechnie.

8. Colonne de direction selon l'une quelconque des revendications 2 à 7, **caractérisée en ce que** la première partie (27) de l'élément d'absorption (26), dans laquelle la pièce de commutation (33) est en prise dans sa position active, est maintenue en position immobile sur l'unité d'enveloppe (4).

9. Colonne de direction selon l'une quelconque des revendications 1 à 8, **caractérisé en ce que** le dispositif de serrage (5) comprend un boulon de serrage (12), qui traverse des ouvertures (10, 11) dans des joues latérales (8, 9) de l'unité de support (1), entre lesquelles l'unité d'enveloppe (4) est disposée, et qui tourne autour de son axe lors de l'ouverture et de la fermeture du dispositif de serrage (5), dans laquelle il se trouve au moins une pièce de maintien (23) disposée entre les joues latérales (8, 9) de l'unité de support (1) et déplacée par la rotation du boulon de serrage (12) lors de l'ouverture et de la fermeture du dispositif de serrage (5), laquelle s'accroche à l'élément d'absorption (26, 26') dans l'état fermé du dispositif de serrage (5) et est écartée de l'élément d'absorption (26) dans l'état ouvert du dispositif de serrage (5).

10. Colonne de direction selon la revendication 9, **caractérisée en ce que** l'élément d'absorption (26) présente une multiplicité d'éléments de prise (29) se succédant dans la direction longitudinale (6) de la colonne de direction, qui sont de préférence formés par des creux, dans lesquels on peut introduire un ergot saillant (31) de la pièce de maintien (23) pour la réalisation d'une prise par emboîtement agissant dans la direction longitudinale (6) de la colonne de direction.

11. Colonne de direction selon l'une quelconque des revendications 1 à 10, **caractérisée en ce que** la direction de déplacement (21) est parallèle à la direction axiale d'une partie de l'arbre de direction (2) faisant suite à une extrémité (3) du côté du volant de direction.
